(19) Europäisches Patentamt
European Patent Office
Office européen des brevets

(11) **EP 2 408 190 A1**

(12) **EUROPEAN PATENT APPLICATION**

(43) Date of publication:
**18.01.2012 Bulletin 2012/03**

(51) Int Cl.:
*H04N 5/14* (2006.01)  *G06K 9/00* (2006.01)

(21) Application number: **10169225.9**

(22) Date of filing: **12.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicants:
• **Mitsubishi Electric R&D Centre Europe B.V.**
**The Surrey Research Park**
**Guildford, Surrey GU2 7YD (GB)**
Designated Contracting States:
**GB**
• **Mitsubishi Electric Corporation**
**Chiyoda-ku**
**Tokyo 100-8310 (JP)**
Designated Contracting States:
**AL AT BE BG CH CY CZ DE DK EE ES FI FR GR HR HU IE IS IT LI LT LU LV MC MK MT NL NO PL PT RO SE SI SK SM TR**

(72) Inventors:
• **Paschalakis, Dr. Stavros**
**Guildford**
**Surrey GU1 2LT (GB)**
• **Wnukowicz, Dr. Karol**
**03-287 Warsaw (PL)**

(74) Representative: **HOFFMANN EITLE**
**Patent- und Rechtsanwälte**
**Arabellastraße 4**
**81925 München (DE)**

(54) **Detection of semantic video boundaries**

(57)    A video processing technique is disclosed for accurate detection of semantic video boundaries, also commonly referred to as chapter boundaries or scene boundaries, by the processing of segments of the video, such as shots. The technique does not infer semantic video boundaries by grouping shots together, nor does it rely on predefined default chapter durations. Instead, the technique detects semantic video boundaries directly by making a semantic video boundary hypothesis at a segment boundary and verifying that hypothesis by examining a variable, according to the content at the location, number of segments around the hypothesis, each segment represented by a variable, according to the segment content, number of samples, and assessing the degree to which segments before the semantic video boundary hypothesis are linked to segments after the semantic video boundary hypothesis and/or the degree to which segments before/after the semantic video boundary hypothesis are linked to each other. Thus, the technique divides a video sequence into segments, calculates the parameters of a variable temporal segment window centred at each segment boundary, calculates inter-segment differences between the segments of the temporal window, calculates a semantic video boundary strength measure based on the calculated inter-segment differences, and decides whether each segment boundary is also a semantic video boundary.

SEQUENCE OF VIDEO FRAMES

IDENTIFY BOUNDARIES BETWEEN VIDEO SEGMENTS — S100

SELECT THE NEXT IDENTIFIED BOUNDARY AS A HYPOTHESISED SEMANTIC VIDEO BOUNDARY — S105

DEFINE A WINDOW OF VIDEO SEGMENTS FOR THE HYPOTHESISED SEMANTIC VIDEO BOUNDARY — S110

CALCULATE INTER-SEGMENT DIFFERENCES — S120

CALCULATE A STRENGTH MEASURE FOR THE HYPOTHESISED SEMANTIC VIDEO BOUNDARY — S130

CONFIRM OR REJECT THE HYPOTHESISED SEMANTIC VIDEO BOUNDARY — S140

ANOTHER IDENTIFIED SEGMENT BOUNDARY? — S150
YES / NO

END

FIG. 2

EP 2 408 190 A1

## Description

## Field of the Invention

This invention relates to the accurate detection of semantic video boundaries, also commonly referred to as chapter boundaries or scene boundaries, by the processing of segments of the video.

## Background to the Invention

US 2004/0086258 "METHOD AND SYSTEM FOR SELECTING CHAPTER BOUNDARIES FOR DIGITAL VIDEO RECORDINGS" discloses a method for selecting a chapter boundary for a digital video recording that includes examining cut-rates for the recording. According to the method of US 2004/0086258, a determination is made regarding whether a default chapter length has passed and whether the cut-rate for the recording at the default chapter length is low. Then, a chapter boundary is selected at the default chapter length when the cut-rate for the recording at the default chapter length is low. Otherwise, the chapter boundary is set to a point before or after the default chapter length where the cut-rate is low.

The rationale behind US 2004/0086258 is that fixed-length chapters, e.g. 5-minute chapters, can result in chapter boundaries being inserted at inappropriate points in the video, e.g. in the middle of an important battle scene or dialogue. The appropriateness of the boundary is judged by the cut-rate at that point in the video: A low cut rate, i.e. long shots, is deemed appropriate for a chapter boundary while a high cut-rate, i.e. short shots, is deemed inappropriate. Thus, if the cut-rate is low at the default chapter length, e.g. 5 minutes, then a chapter boundary is there. Otherwise, the chapter boundary is set at some point between a minimum chapter length, e.g. 4 minutes, and a maximum chapter length, e.g. 6 minutes, where the cut-rate is low. Therefore, the method in US 2004/0086258 does not so much detect actual chapter boundaries, but provides some flexibility to the fixed-length chapter division mechanism so that chapter boundaries are not inserted at high cut-rate points.

US 2008/0112618 "METHOD FOR CHAPTERING AN IMAGE DATUM ACCORDING TO A SCENE CHANGE" discloses a method for chaptering an image datum according to a scene change by (a) calculating a first image characteristic value of a first image frame of an image datum, (b) calculating a second image characteristic value of a second image frame of the image datum, (c) determining whether a difference between the first image characteristic value and the second image characteristic value is greater than or equal to a threshold value, and (d) chaptering the image datum so that the first image frame belongs to a first section and the second image frame belongs to a second section when the difference between the first image characteristic value and the second image characteristic value is greater than or equal to the threshold value.

The method of US 2008/0112618 uses simple frame-pair comparisons as well as predefined chapter durations to determine chapter boundaries. More specifically, starting from a start time T0, the method compares characteristic values (brightness integrals) of subsequent frames at points T1 and T2. If these characteristic values are deemed different enough, according to some threshold, then a chapter boundary is inserted between T1 and T2, and point T0 moves to T2. If, on the other hand, they are not deemed different enough then the time difference between points T0 and T2 is considered. If this time difference exceeds a certain threshold, then a chapter boundary is inserted between T1 and T2, and point T0 is moved to T2. If this time difference does not exceed this threshold then no chapter boundary is inserted and points T1 and T2 move forward, until a chapter boundary is found.

Thus, the method of US 2008/0112618 simply inserts a chapter boundary at points of large visual change or, if none are found after a certain time period, forces a chapter boundary. Although this method improves upon the basic fixed-length chapter division, the problem is that the brightness difference between any two frames in a video is a very weak indicator for setting chapter boundaries. Such an approach is more suited to detection of shots, where there is some discontinuity at the shot boundaries, and is likely to result in poor chapter segmentation of the video. In practice, the correct detection of chapter boundaries needs to take into account the fact that chapters are complex and may actually contain many large visual changes, many shot changes, etc., which the method of US 2008/0112618 would mistake for chapter boundaries.

US 2009/0136198 "VIDEO REPRODUCING/ RECORDING AND PLAYING SYSTEM AND METHOD FOR SETTING AND PLAYING VIDEO SECTION" discloses a method for detecting scene boundaries as follows. The difference between two consecutive frames is assessed. If this difference does not exceed a predetermined threshold, no scene boundary is detected. If, on the other hand, this difference does exceed the threshold, then the length of the time interval between this candidate scene boundary and the previously detected scene boundary is assessed. If this time difference does not exceed a predetermined threshold, no scene boundary is detected. If, however, this difference does exceed the threshold, then a scene boundary is detected.

Thus, the method of US 2009/0136198 simply inserts a chapter boundary at points of large visual change, provided that the resultant scene will not be too short. Therefore, this method also improves upon the basic fixed-length chapter division, but has the same drawbacks as the method of US 2008/0112618, namely that the difference between any two frames in a video is very weak information for setting scene boundaries, and that the correct detection of scenes needs to take into account the fact that they are complex and may actually contain many large visual changes, many shot changes, etc., which the method of US 2009/0136198 would mistake for chapter boundaries.

US 2006/0263061 "METHOD OF AND APPARATUS FOR SETTING VIDEO SIGNAL DELIMITER INFORMATION JUDGED FROM AUDIO AND VIDEO SIGNALS" discloses a method and apparatus comprising an image structuring section which analyzes the similarity between consecutive frames of a video signal and obtains first delimiter information that provides delimitation according to the semantic content of the video signal and an arbitrary interval detecting section for an audio signal. The apparatus creates second delimiter information for silent portions in the audio signal, sets an arbitrary interval, and creates third delimiter information by superimposing the first and second delimiter information one on top of the other. In this case, if the first delimiter information exists in the arbitrary interval, the apparatus rejects the first delimiter information. The determination of the first delimiter information that provides delimitation according to the semantic content of the video signal is based on assessing the similarity between two shots and a shot grouping mechanism. More specifically, the similarity between two shots is assessed by selecting a number of consecutive frames at the end of the previous shot and a number of consecutive frames at the beginning of the next shot, determining the similarity between each selected frame of the previous shot to every selected frame in the next shot, counting how many selected frame pairs are similar and determining that the two shots are similar if said count is equal or larger than a certain threshold. Then, an interval where similar shots appear intensively is considered a meaningful interval and the index "the number of dialogs" is introduced to quantify the density at which similar shots appear. The index "the number of dialogs" becomes larger when many shots are included; when the number of shots contributing to dialogs is large; and when the total time of shots contributing to dialogs is long. Thus, dialog intervals are calculated. Then, adjacent dialog intervals are connected to one another.

There are a number of problems with this method. Firstly, the comparison of two shots based on an exhaustive comparison between a set of consecutive frames in each shot carries a high computational cost and offers little in return: The consecutive frames of a small part of a shot will, by definition, be quite similar and, as a result, an exhaustive comparison between two consecutive frame sets belonging to two shots will produce a large number of roughly similar similarity values. Thus, counting how many frame pairs in the exhaustive comparison appear to be similar will also be a weak cue in deciding whether the two shots are similar. The main shortcoming of this method, however, comes from the fact that it attempts to derive delimitation information not directly but indirectly, through shot grouping into dialogs intervals. These dialog intervals are calculated according to an index value which becomes larger when many shots are included in the dialog, when the number of shots contributing to dialogs is large, and when the total time of shots contributing to dialogs is long. This gives rise to an "inertia" problem: A strongly correlated dialog with many and/or long shots can easily absorb an equally correlated dialog with fewer and/or shorter shots. Then, according to US 2006/0263061, adjacent dialog intervals are connected to one another, although this last feature is of questionable value in trying to divide a video into chapters. Because the method of US 2006/0263061 does not actually derive delimitation information directly, but only indirectly through shot grouping into dialogs intervals, with all the aforementioned problems that entails, it is best suited for the detection of specific scenes, namely actual dialogs, e.g. with alternating shots of two people, rather than generic scene boundary detection.

US 2006/0114992 "AV SIGNAL PROCESSING APPARATUS FOR DETECTING A BOUNDARY BETWEEN SCENES, METHOD, RECORDING MEDIUM AND COMPUTER PROGRAM THEREFOR" discloses a method for detecting scene boundaries comprising comparing each shot to a fixed number of shots k immediately before it and the same fixed number of shots $k$ immediately after it. Then, the detection of scene boundaries relies on the last shot of a scene being similar to a large number of shots before it and not similar to the shots after it and the first shot of the next scene being similar to a large number of shots after it and not similar to the shots before it.

There are a number of problems with this method. First, although it does not perform shot grouping as such, it relies heavily on each scene being a highly coherent shot group with very little in common with the next scene. More specifically, this method places a very high importance on the shots within a scene being similar to each other and different to the shots of other scenes. Most critically, it requires the last shot of a scene being similar to the shots before it and the first shot of a scene being similar to the shots after it. In practice, only very simple videos will exhibit this pattern. For complex videos, for example films with fast action, a scene will generally contain shots which are not all similar to each other, but some of them may be similar to the shots of the next or previous scene, and such "across boundary" similarities will be more frequent near the scene boundary, where there may be "transition shots", which allow the narrative to flow smoothly. Clearly, the method will fail in cases where there is dissimilarity within the first or last few shots of a scene, which is actually quite common with professional video content such as films. Therefore, a more sophisticated shot comparison strategy is needed. Another problem with this method is that the determination of a scene boundary is based on the examination of a fixed number of shots k before the boundary and the same the same fixed number of shots k after the boundary. An exemplary value of $k$ = 5 is given in US 2006/0114992. This fixed temporal window of shots neglects the fact that different shots have very different characteristics. Fast-paced shots can last as little as a second or less, while slow-paced shots can last tens of seconds or more than a minute. With fast-paced content, it is often not possible to reach a confident scene boundary decision by examining just a few seconds of content. On the other hand, allowing for a very high value of $k$ to ensure that a sufficient amount of video is examined will cause problems when determining the boundaries of scenes with long shots, said scenes usually comprising far fewer shots. Furthermore, because of the above problems, in the event that a fast scene is followed by a slow scene, the accurate detection of the scene boundary may not be possible using a symmetric, in terms of number shots, shot temporal window as per US 2006/0114992.

**Summary of the Invention**

In view of the known techniques and their limitations, it is an object of the present invention to provide accurate detection of semantic video boundaries.

According to the present invention, there is provided a method and apparatus for processing a sequence of video frames to detect a semantic video boundary in the sequence. Segment boundaries between video segments in the sequence are identified, each video segment comprising a plurality of video frames. An identified segment boundary is selected as a hypothesised semantic video boundary, and a window containing a plurality of video segments is defined on at least one side thereof. Inter-segment differences are calculated between at least some of the video segments in the window. At least one strength measure is calculated for the hypothesised semantic video boundary in dependence upon the calculated inter-segment differences. The hypothesised semantic video boundary is confirmed or rejected in dependence upon the calculated strength measure(s).

The present invention provides a method of processing a sequence of video frames to detect a semantic video boundary in the sequence, the method comprising:

  identifying segment boundaries between video segments in the sequence, wherein each video segment comprises a plurality of video frames;

  selecting an identified segment boundary as a hypothesised semantic video boundary;

  defining a window containing a plurality of the video segments on at least one side of the hypothesised semantic video boundary;

  calculating inter-segment differences between video segments in the window;

  calculating at least one strength measure for the hypothesised semantic video boundary in dependence upon the calculated inter-segment differences; and

  confirming or rejecting the hypothesised semantic video boundary in dependence upon the calculated strength measure(s).

The present invention also provides an apparatus operable to process a sequence of video frames to detect a semantic video boundary in the sequence, the apparatus comprising:

  a segment boundary identifier operable to identify segment boundaries between video segments in the sequence, wherein each video segment comprises a plurality of video frames;

  a segment boundary selector operable to select an identified segment boundary as a hypothesised semantic video boundary;

  a window identifier operable to define a window containing a plurality of the video segments on at least one side of the hypothesised semantic video boundary;

  an inter-segment difference calculator operable to calculate inter-segment differences between video segments in the window;

  a strength measure calculator operable to calculate at least one strength measure for the hypothesised semantic video boundary in dependence upon the calculated inter-segment differences; and

  a decision calculator operable to confirm or reject the hypothesised semantic video boundary in dependence upon the calculated strength measure(s).

The present invention further provides a computer program product, such as a storage medium or a signal, carrying computer program instructions to program a programmable processing apparatus to become operable to perform a method as set out above.

**List of Figures**

Embodiments of the invention will now be described, by way of example only, with reference to the accompanying drawings, in which:

  Figure 1a schematically shows the components of an embodiment of the invention, together with the notional functional processing units into which the processing apparatus component may be thought of as being configured when programmed by computer program instructions;

  Figure 1b shows the components of the inter-segment difference calculator processing unit of Figure 1a in an embodiment of the invention;

Figure 2 shows the processing operations performed by the processing apparatus of Figures 1a and 1b in a first embodiment of the invention to detect semantic video boundaries in a sequence of video frames;

Figure 3 illustrates the setting of a window of video segments in the processing at step S110 in Figure 2;

Figure 4a illustrates an example of a window of video segments defined at step S110, in which the numbers of segments on each side of the hypothesised semantic video boundary are fixed;

Figure 4b illustrates an example of a window of video segments defined at step S110, in which the numbers of segments on each side of the hypothesised semantic video boundary are selected so that the total duration of the respective segments is in a certain range;

Figure 4c illustrates an example of a window of video segments defined in step S 110, in which the numbers of segments on each side of the hypothesised semantic video boundary are selected to that (i) they are in a certain range (ii) the total duration of the respective segments is also in a certain range;

Figure 5 illustrates the calculation of cross-hypothesis inter-segment differences and same-side inter-segment differences in the processing at step S120 in Figure 2;

Figure 6a illustrates the selection of cross-hypothesis video segments for comparison to generate cross-hypothesis inter-segment differences at step S120 in Figure 2;

Figure 6b illustrates the selection of same-side video segments for comparison to calculate same-side inter-segment differences at step S120 in Figure 2;

Figures 7a, 7b and 7c illustrate one example of the weighting of inter-frame differences performed at step S120 in Figure 2 in an embodiment of the present invention in order to calculate an inter-segment difference;

Figure 8 illustrates an alternative example of the weighting of inter-frame differences in the processing at step S120 in Figure 2 in order to calculate an inter-segment difference;

Figure 9 illustrates an example of processing performed at step S130 in Figure 2 in an embodiment of the present invention to weight the inter-segment differences calculated at step S120 as part of the processing to calculate a strength measure for the hypothesised semantic video boundary;

Figure 10 shows the processing operations performed by the processing apparatus of Figures 1a and 1b in a second embodiment of the present invention to detect semantic video boundaries in a sequence of video frames;

Figure 11 illustrates the processing operations performed in an alternative embodiment which employs more than one type of visual descriptor for each representative frame to detect semantic video boundaries in a sequence of the video frames.

**Embodiments of the Invention**

1st Embodiment

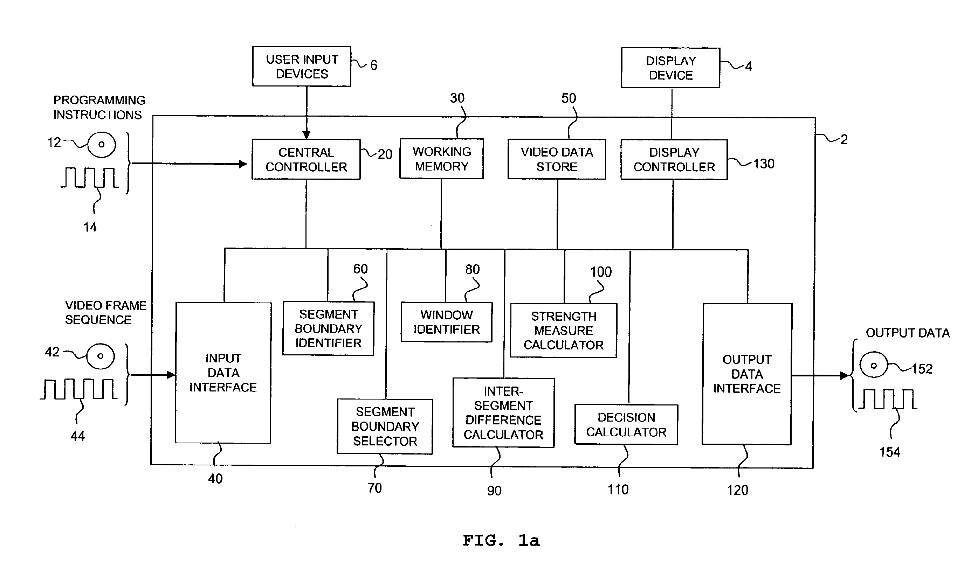

Referring to FIG. 1a, an embodiment of the invention comprises a programmable processing apparatus 2. Such an apparatus may comprise, for example, a Blu-ray Disc player, personal computer (PC), etc., containing, in a conventional manner, one or more processors, memories, graphics cards, etc., together with a display device 4, such as a television or personal computer monitor, and user input devices 6, such as buttons, a keyboard, mouse, etc.

The processing apparatus 2 is programmed to operate in accordance with programming instructions input, for example, as data stored on a data storage medium 12 (such as an optical CD-ROM, semiconductor ROM, magnetic recording medium, etc.), and/or as a signal 14 (for example an electrical or optical signal input to the processing apparatus 2, for example from a remote database, by transmission over a communication network (not shown) such as the Internet or by transmission through the atmosphere), and/or entered by a user via a user input device 6 such as a keyboard.

As will be explained in more detail below, the programming instructions comprise instructions to program the processing apparatus 2 to become configured to process a sequence of video frames to detect semantic video boundaries, also commonly referred to as chapter boundaries or scene boundaries, in the sequence.

As will be understood from the following description, the processing performed by the processing apparatus 2 does not infer semantic video boundaries by grouping shots together, nor does it rely on predefined default chapter durations. Instead, the processing detects semantic video boundaries directly by making a semantic video boundary hypothesis at a segment boundary between segments of the video sequence and verifying that hypothesis by examining a variable (according to the content at the location) number of segments around the hypothesis, each segment represented by a variable (according to the segment content) number of samples, and assessing the degree to which segments before the semantic video boundary hypothesis are linked to segments after the semantic video boundary hypothesis and/or the degree to which segments before/after the semantic video boundary hypothesis are linked to each other.

More particularly, by way of overview, given a video segmented into segments, processing apparatus 2:

- calculates the parameters of a variable temporal segment window containing each segment boundary,
- calculates inter-segment differences between the segments of the temporal window,
- calculates a semantic video boundary strength measure based on the calculated inter-segment differences,
- decides whether each segment boundary is also a semantic video boundary.

When programmed by the programming instructions, processing apparatus 2 can be thought of as being configured as a number of functional units for performing processing operations. Examples of such functional units and their interconnections are shown in FIG. 1a. The units and interconnections illustrated in FIG. 1a are, however, notional, and are shown for illustration purposes only to assist understanding; they do not necessarily represent units and connections into which the processor(s), memory(s), etc. of the processing apparatus 2 actually become configured.

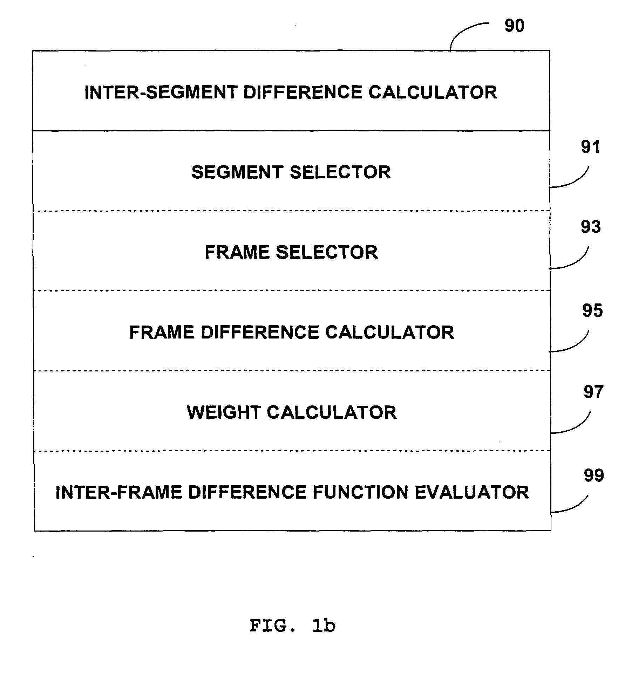

Similarly, FIG. 1b shows the notional functional processing units into which the inter-segment difference calculator 90 in FIG. 1a can be thought of as being configured.

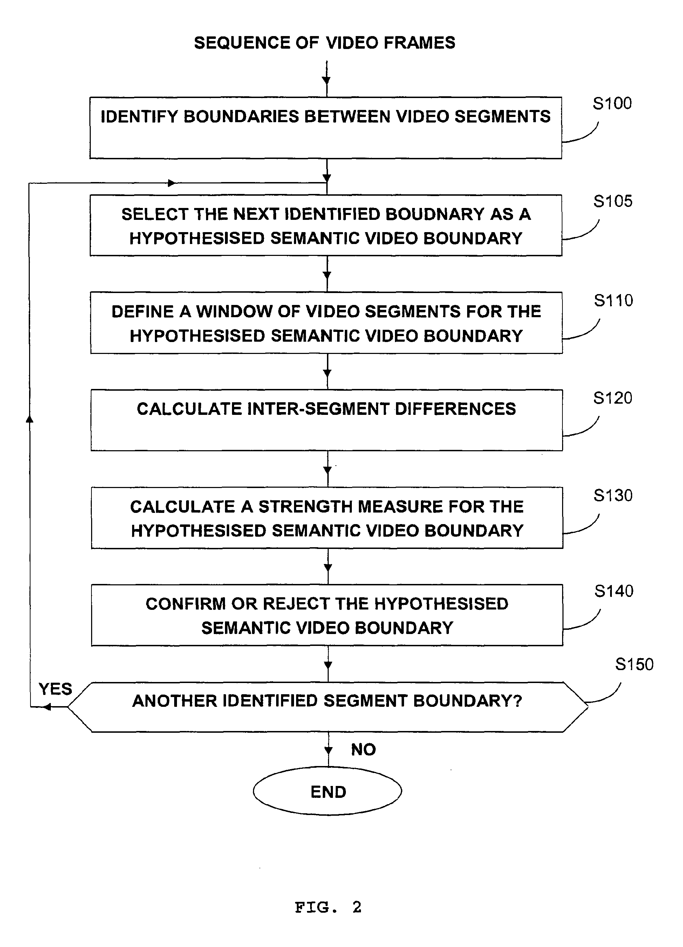

The operations performed by each of the functional units shown in FIGS. 1a and 1b will be described below whilst referring to FIG. 2, which is a flowchart showing the processing operations performed by processing apparatus 2.

Referring to FIG. 2, processing is performed for a video sequence $f_i$, with $i \in [0, N\text{-}1]$ the frame index and $N$ the number of frames in the video.

In step S100, segment boundaries in the video sequence are identified by segment boundary identifier 60 to divide the video sequence into low-level structural units. In one embodiment of the invention, these low-level structural units are video segments comprising the video shots $s_j$, with $j \in [0, M\text{-}1]$ the shot index and $M$ the number of shots in the video, each shot comprising frames $f_k^j$, with $k \in [0, P_j\text{-}1]$ the frame index for shot $s_j$ and $P_j$ the number of frames for shot $s_j$. In video production, a shot is defined as the video sequence captured between the "start recording" and "stop recording" operations of a camera. The identification of abrupt (cut) or gradual (fade/dissolve) shot boundaries can be carried out in any of a number of different ways, for example as described in co-pending patent applications EP 1 640 914, EP 1 640 913 and EP 1 914 994.

In alternative embodiments of the invention, the low-level structural units determined in step S100 may be video segments other than shots. For example, they may be video segments delimited by points of significant change of the content, which may include shot changes but also other significant content changes caused by sudden motion, illumination changes, etc. As another example, the low-level structural units may take the form of fixed short-length video segments, for example 1 or 2 seconds in duration. For convenience, the term "segment" will be used henceforth to apply, unless otherwise specified, to all aforementioned types of low-level structural units or their combination.

In step S105, segment boundary selector 70 selects the next identified segment boundary (this being the first identified segment boundary the first time step S105 is performed) as a hypothesised semantic video boundary, which will then be tested to determine whether or not it is an actual semantic video boundary as described below.

In step S 110 of FIG. 2, as the first step of determining whether the hypothesised semantic video boundary actually represents a semantic video boundary between two segments, a window of video segments is defined by window identifier 80 adjacent (i.e. near to or contiguous with) the hypothesised semantic video boundary on at least one side thereof. More particularly, a temporal segment neighbourhood is formed and a number of segments on at least one side of the hypothesised semantic boundary are selected to be examined.

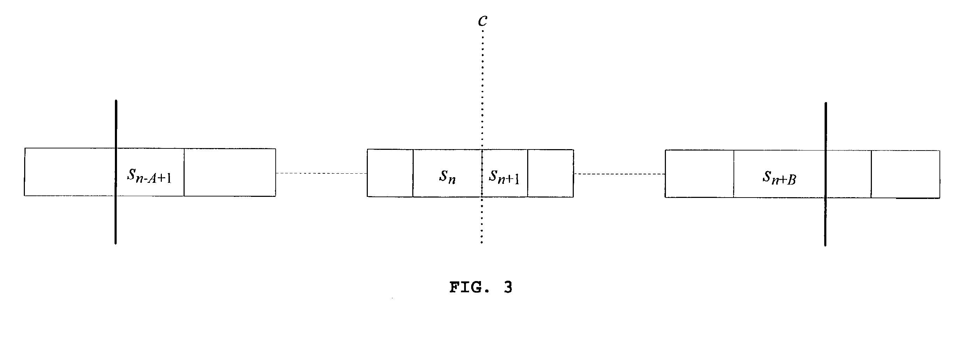

In more detail, with a hypothesised semantic or chapter boundary $c$ between two segments $s_n$ and $s_{n+1}$, the segments $s_{n\text{-}A\text{-}1}, ..., s_n, s_{n+1}, ..., s_{n+B}$ are considered, where A and B may be fixed or may be determined dynamically and may or may not be equal, depending on the segments around c. This is illustrated in FIG. 3. The numbers $A$ and $B$ are selected so that they satisfy certain conditions and/or the total duration of their respective segments also satisfies certain conditions, as described below.

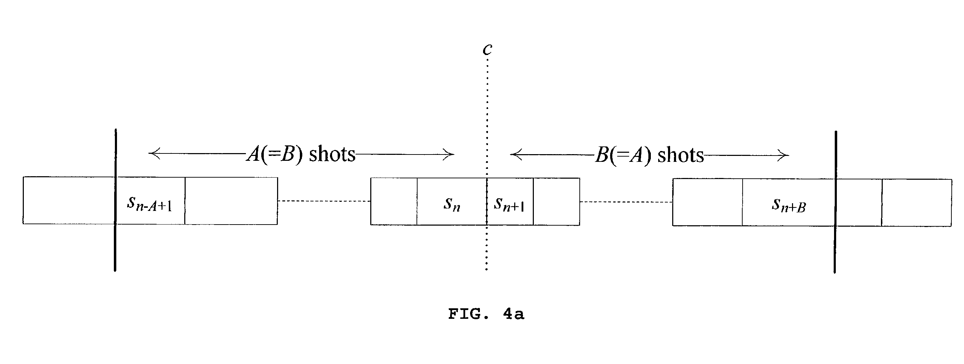

More particularly, in one embodiment of the invention, both A and $B$ are fixed. This is illustrated in FIG. 4a. In such a case, it is usual that A = B and typically $5 \leq A \leq 20$.

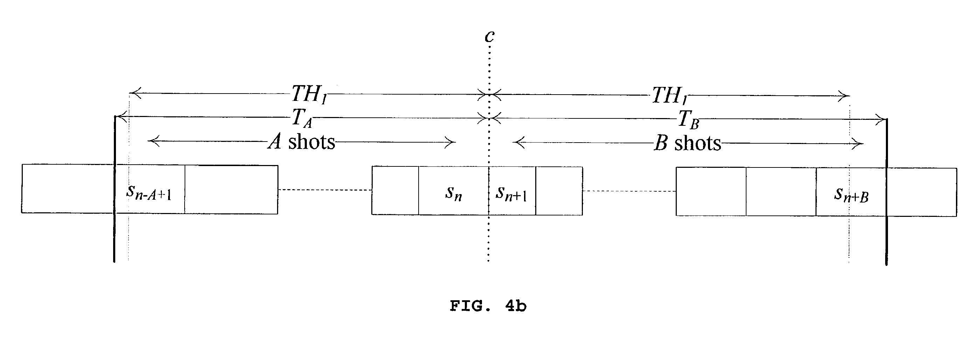

In another embodiment of the invention, A and B are selected so that the total duration of the respective segments is in a certain range. More specifically, each of the numbers A and $B$ is selected so that the total duration of their respective segments $T_A$ and $T_B$ is not below a time threshold $TH_1$. This is illustrated in FIG. 4b. This condition ensures that, when deciding whether c is a semantic boundary or not, a minimum duration of video content will be examined. A typical value for $TH_1$ is $TH_1$ = 20 seconds.

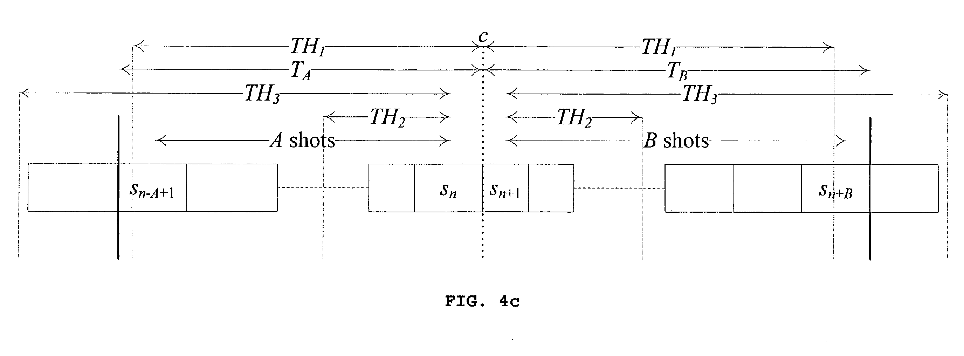

In a further embodiment of the invention, A and B are selected so that (i) they are in a certain range and (ii) the total duration of the respective segments is also in a certain range. More specifically, each of the numbers A and B is selected so that the total duration of their respective segments $T_A$ and $T_B$ is not below a time threshold $TH_1$. This condition ensures that, when deciding whether c is a semantic boundary or not, a minimum duration of video content will be examined. Furthermore, overriding the condition for the durations $T_A$ and $T_B$, each of A and B must be larger than a threshold $TH_2$ and the sum of A and B must be smaller than a threshold $TH_3$. In deciding whether c is a semantic boundary or not, the first of these two conditions ensures that a minimum number of video segments will be examined, while the second condition ensures that there is a practical limitation imposed on the number of video segments that will have to be examined. This is illustrated in FIG. 4c. Typical values for the thresholds are $TH_1 =20$ seconds, $TH_2 =1$ and $TH_3 =40$, i.e. the video should be examined for at least 20 seconds before and after c, and at least two segments before and after c, but no more than a total of 40 segments, should be considered.

Referring again to FIG 2, in step S120, inter-segment difference calculator 90 calculates inter-segment differences between segments in the window defined in step S110. By way of overview, this processing comprises:

- selecting segments within the window to be compared (this processing being performed by segment selector 91);

- selecting one or more frames within each segment to be compared (this processing being performed by frame selector 93);

- calculating inter-frame differences between the selected frames (this processing being performed by frame difference calculator 95);

- optionally, weighting the calculated inter-frame differences (this processing being performed by weight calculator 97); and

- evaluating an inter-frame difference function to calculate an inter-segment difference (this processing being performed by inter-frame difference function evaluator 99).

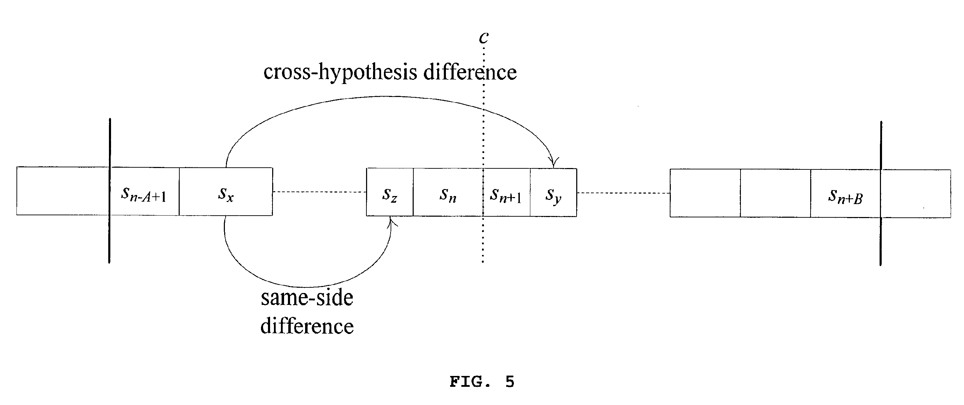

More particularly, for the purpose of assessing the validity of the hypothesised semantic boundary c between two segments $s_n$ and $S_{n+1}$, the difference between segments before c and segments after c and/or the difference between segments before and/or after c is calculated by inter-segment difference calculator 90. With the former measure, the aim is to assess how different the segments are on either side of the hypothesised semantic boundary, while with the latter measures, the aim is to assess how similar the segments are within at least one side of the hypothesised semantic boundary. This is illustrated in FIG. 5. In one embodiment of the invention, the examination of segments around the hypothesised semantic boundary c between two segments $S_n$ and $S_{n+1}$ comprises assessing only the difference between segments before c and segments after c, i.e. calculating cross-hypothesis inter-segment differences.

In an alternative embodiment of the invention, the examination of segments around c may comprise assessing only the difference between segments before and/or after c, i.e. calculating same-side inter-segment differences.

In yet another alternative embodiment of the invention, the examination of segments around c may comprise assessing both the difference between segments before c and segments after c and the difference between segments before and/or after c, i.e. calculating both cross-hypothesis inter-segment differences and same-side inter-segment differences.

Segment selector 91 therefore selects whether segments before and segments after c are to be compared to generate cross-hypothesis inter-segment differences and/or whether segments before and/or after c are to be compared to generate same-side inter-segment differences.

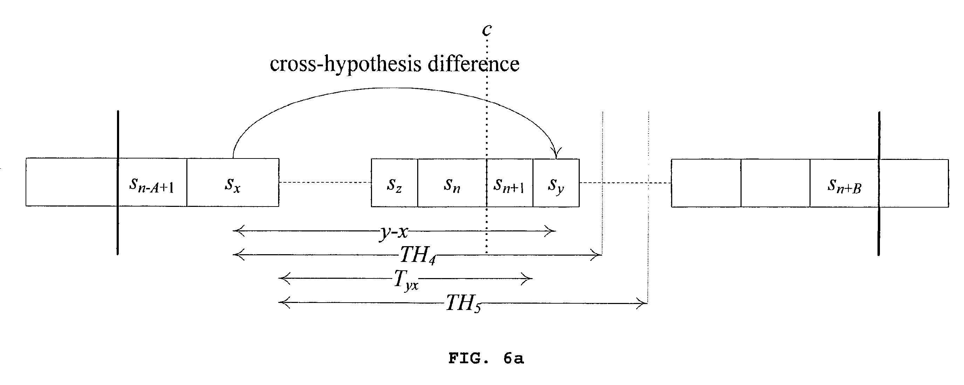

Furthermore, in one embodiment of the invention, segment selector 91 may select the segments to be compared so that, when segments are compared across c, not every segment before c is compared to every segment after c, but a segment $s_x$ before c is compared to a segment $S_y$ after c if their temporal distance in terms of segment indices and/or time satisfies certain conditions. For example, a segment $s_x$ before c is compared to a segment $s_y$ after c if their segment index temporal distance y-x is below a threshold $TH_4$ and/or their time temporal distance $T_{yx}$ is below a threshold $TH_5$. This is illustrated in FIG. 6a. Typical values for the thresholds are $TH_4 = 20$ and $TH_5 = 20$ seconds, but these values should be set taking into account the values for $TH_1$, $TH_2$ and $TH_3$. These conditions reflect the fact that segments which are very far apart in terms of segment distance and/or time distance are expected to be quite different and will not offer a very good indication as to whether a semantic boundary exists at c.

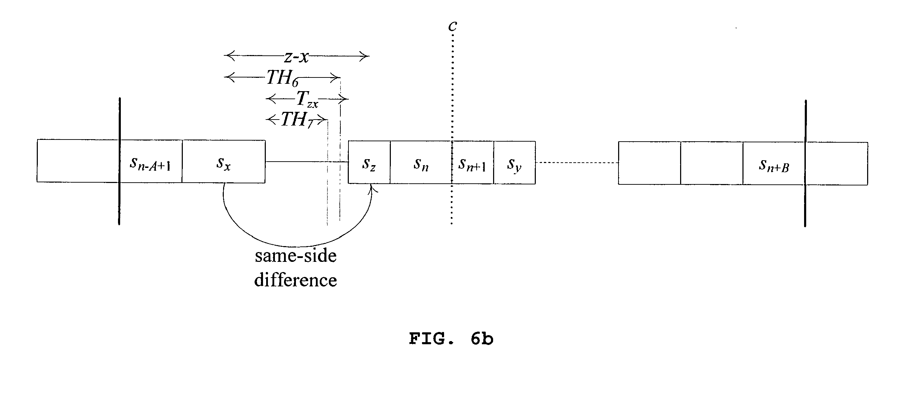

Similarly, when segments are compared within either side of c, segment selector 91 may select the segments to be compared so that not every segment is compared to every other segment, but a segment $s_x$ is compared to a segment $s_z$ only if their temporal distance in terms of segment indices and/or time satisfies certain conditions. For example, a segment $s_x$ is compared to a segment $s_z$ if their segment index temporal distance z-x is above a threshold $TH_6$ and their time temporal distance $T_{zx}$ is above a threshold $TH_7$. This is illustrated in FIG. 6b for segments before the hypothesised semantic boundary c, but the situation is the same for segments after $c$. Typical values for the thresholds are $TH_6 = 4$ and $TH_7 = 5$ seconds, but these values should be set taking into account the values for $TH_1$, $TH_2$ and $TH_3$. These conditions reflect the fact that segments which are very close in terms of segment distance or time distance are expected to be quite similar.

For the purpose of calculating the difference between two segments, each segment may be represented by representative features. In one embodiment, all the frames of the segment may be used to represent the segment or frame selector 93 may select a subset of the frames of the segment to be used to represent the segment. In the latter case, a segment $s_x$ is represented by frames $f_l^x$, with $l \in [0, Q_x-1]$ the representative frame index for segment $s_x$ and $Q_x$ the number of representative frames for segment $s_x$ and with $Q_x < P_x$ where $P_x$ is the total number of frames for segment $s_x$. In one embodiment of the invention, each segment has the same number of representative frames. Examples or such representative frame sets include the middle frame of the segment, or the first and last frames of a segment, or the first and last I-frames of a segment, or the two frames which appear shortly, for example 0.5 seconds, after the start and before the end of the segment, or any combination thereof, etc. In an alternative embodiment of the invention, each segment may have a different number of representative frames. Examples or such representative frame sets include the I-frames of a segment, the frames sampled at short, for example 0.5 second, intervals within a segment, or the frames for which the segment activity exceeds a threshold, the segment activity measured for example as an accumulation of absolute pixel-wise frame differences from the previous representative frame or as motion intensity at a particular instance within a segment, or any combination thereof, etc. In yet another embodiment of the invention, the representative frames of a segment $s_x$ include at least a fixed set of frames, for example the first and last frames of the segment, supplemented by a variable number of other frames, for example sampled at short time intervals within the segment. Furthermore, instead of representing each segment by the totality of its actual frames or a subset of its actual frames, segments may be represented by descriptors of said frames capturing important visual characteristics. Examples of such visual descriptors include, but are not limited to, the Dominant Colour Descriptor and the Scalable Colour Descriptor. These descriptors are not presented here in detail, but are defined and expertly described in the MPEG-7 Standard ISO/IEC 15938-3:2002.

The difference between two frames or their descriptors, i.e. inter-frame difference, is calculated by frame difference calculator 95 according to a measure that is suitably chosen for the type of representative feature used. For example, the difference between actual frames may be calculated as the sum of absolute pixel-wise differences between the frames, while the difference between frame descriptors may be calculated according to a suitably chosen measure for each descriptor type.

The difference between two segments, i.e. inter-segment difference, is calculated by inter-frame difference function evaluator 99 as a function of the differences between one or more of the representative frames or descriptors of the first segment and one or more of the representative frames or descriptors of the second segment. For example, for segments $s_x$ and $s_y$, represented by 4 and 3 representative frames respectively, a total of 12 inter-frame differences may be calculated by frame difference calculator 95, for example as sums of absolute pixel-wise differences between the respective frames, and the inter-segment difference may be calculated as a function of said inter-frame differences by inter-frame difference function evaluator 99. In one embodiment of the invention, this function is defined as the minimum, i.e. the inter-segment difference is defined as the minimum inter-frame difference. Alternatives functions include, but are not limited to, the maximum, median and average.

In one embodiment of the invention, inter-frame differences are weighted by weight calculator 97 prior to inter-frame difference function evaluator 99 evaluating a function of the weighted inter-frame differences in order to calculate the inter-segment difference. The weight for each inter-frame difference is determined according to the temporal position of the respective representative features within the segments and the relative temporal positions of the segments.

For example, for a segment $s_a$ represented by frames $f_g^a$, with $g \in [0, Q_a-1]$ the representative frame index for segment $s_a$ and $Q_a$ the number of representative frames for segment $s_a$, and a segment $s_b$ represented by frames $f_h^b$, with $h \in [0, Q_b-1]$ the representative frame index for segment $s_b$ and $Q_b$ the number of representative frames for segment $s_b$, and with $s_a$ preceding $s_b$ in the temporal sequence of segments, the unweighted inter-frame difference $d\left(f_g^a, f_h^b\right)$ may be calculated according to a suitable measure, for example sum of absolute pixel-wise differences, and the weighted difference $d'\left(f_g^a, f_h^b\right)$ may be calculated as

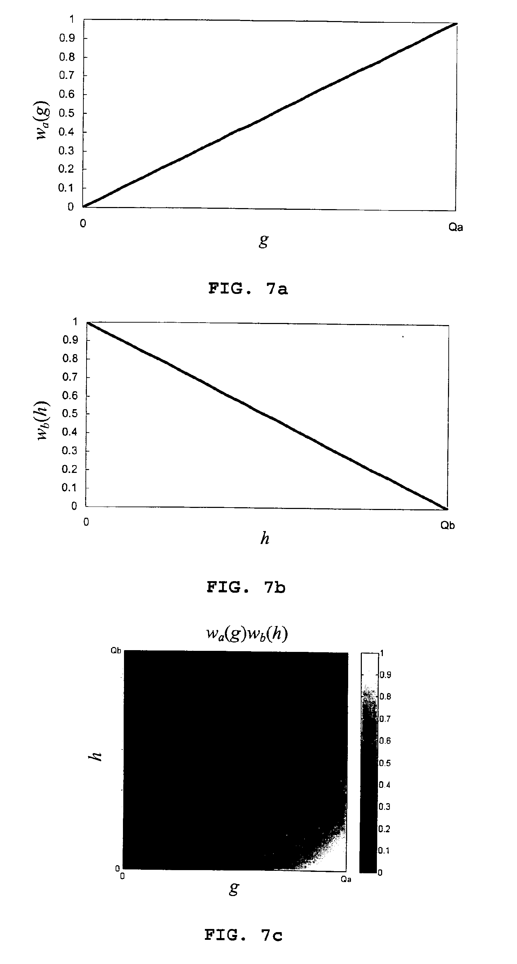

$$d'\left(f_g^a, f_h^b\right) = w_a\left(g\right) w_b\left(h\right) d\left(f_g^a, f_h^b\right),$$ where $w_a$ is a weight function for the preceding segment $s_a$ and $w_b$ is a weight function for the following segment $s_b$. For example, $w_a(g) = g/Q_a$ and $w_b(h) = (1-h)/Q_b$, and their product $w_a(g)w_b(h) = g(1-h)/(Q_a Q_b)$. This is illustrated in FIG. 7. In essence, this gives increasingly higher significance to an inter-frame difference when it is calculated between frames closer to the end of the preceding seg-

ment $s_a$ and frames closer to the beginning of the following segment $s_b$. This reflects the fact that when two shots (actual video shots rather than general low-level structural units) are related, the last few frames of the preceding shot may be quite similar to the first few frames of the subsequent shot. As another example, $d'\left(f_g^a, f_h^b\right)$ may be calculated as

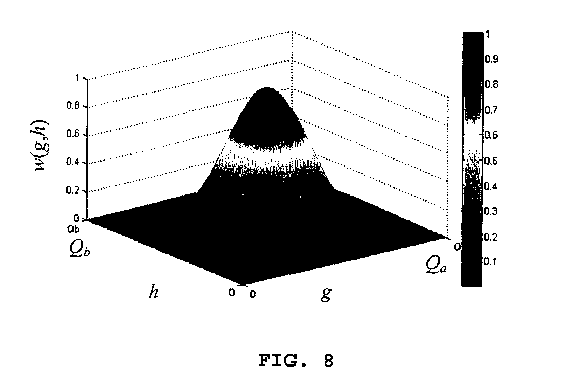

$$d'\left(f_g^a, f_h^b\right) = w\left(g,h\right)d\left(f_g^a, f_h^b\right),$$ where $w$ is a 2D Gaussian function, illustrated in FIG. 8. In essence, this gives increasingly higher significance to an inter-frame difference when it is calculated between frames closer to the middle of the two segments. This reflects the fact that the middle of a shot (actual video shot rather than general low-level structural unit) usually captures the most important elements of the shot.

Referring again to FIG. 2, in step S130, the inter-segment differences are used by strength measure calculator 100 to calculate one or more semantic boundary strength measures as functions of said inter-segment differences. Then, in step S140, the strength measures are processed by decision calculator 110 to confirm or reject the hypothesised semantic boundary.

For example, in step S130 and for cross-hypothesis inter-segment differences, a single strength measure $S^{cross}$ may be calculated as the minimum inter-segment difference. Then, in step S140, c is verified as a semantic boundary if the value of $S^{cross}$ is above a threshold $TH_8$. In essence, c is verified as a semantic boundary if even the most similar segments are judged to be quite different.

Alternatively, in a more sophisticated embodiment, in step S130 and for both cross-hypothesis and same-side inter-segment differences, a cross-hypothesis strength measure $S^{cross}$ may be calculated as the minimum cross-hypothesis inter-segment difference and a same-side strength measure $S^{within}$ may be calculated as the maximum same-side inter-segment difference. In this case, the calculated strength measure therefore comprises both $S^{cross}$ and $S^{within}$. Then, in step S140, c is verified as a semantic boundary if the value of $S^{cross}$ is above a threshold $TH_8$ and the value of $S^{within}$ is below a threshold $TH_9$. In essence, c is verified as a semantic boundary if even the most similar segments across the hypothesised semantic boundary are judged to be quite different and if even the most different segments on either side of the hypothesised semantic boundary are judged to be quite similar.

Clearly, the minimum and maximum functions are used here as examples for the calculation of the strength measures and any other suitable function may be used. For example, alternative functions include, but are not limited to, the median, average, etc.

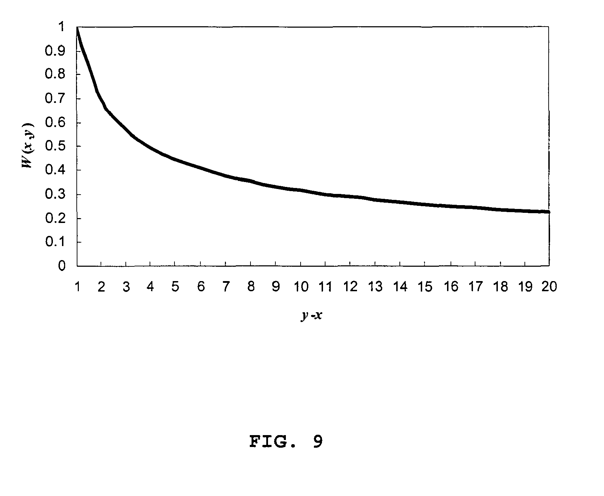

Furthermore, inter-segment differences may be appropriately weighted by strength measure calculator 100 according to the temporal separation of the segments before the calculation of any semantic boundary strength measure. For example, for a segment $s_x$ before c and a segment $s_y$ after c, their weighted difference D' $(s_x, s_y)$ may be calculated as $D'(s_x, s_y) = W(x,y)D(s_x, s_y)$, where $D(s_x, s_y)$ is their unweighted difference and $W$ is a weight function. For example, $W\left(x, y\right) = 1\big/\sqrt{y-x}$. This is illustrated in FIG. 9. Alternatively, the weight function may be defined not as a function of the segment index temporal distance but as a function of the time temporal distance. Similarly, the inter-segment differences between segments either before or after c may also be weighted by strength measure calculator 100 using a suitable weighting function before the calculation of any semantic boundary strength measure.

Referring again to Figure 2, in steps S 150 and S105, following the confirmation or rejection of the hypothesised semantic boundary c between the two segments $s_n$ and $s_{n+1}$, the hypothesised semantic boundary c moves between the segments $s_{n+1}$ and $s_{n-2}$ and the processing resumes in the same fashion as before. Alternatively, in the event that c is confirmed as a semantic boundary, it is not moved forward by just one segment, i.e. between the two segments $s_{n+1}$ and $s_{n+2}$, but by a larger fixed number of segments, or by a variable number of segments so that the new hypothesised semantic boundary is at least a certain time duration away from the just-confirmed semantic boundary, or by a variable number of segments determined so that the confirmation or rejection of the new hypothesised semantic boundary will not require the processing of any segments that were previously processed for the verification of the just confirmed semantic boundary.

## 2nd Embodiment

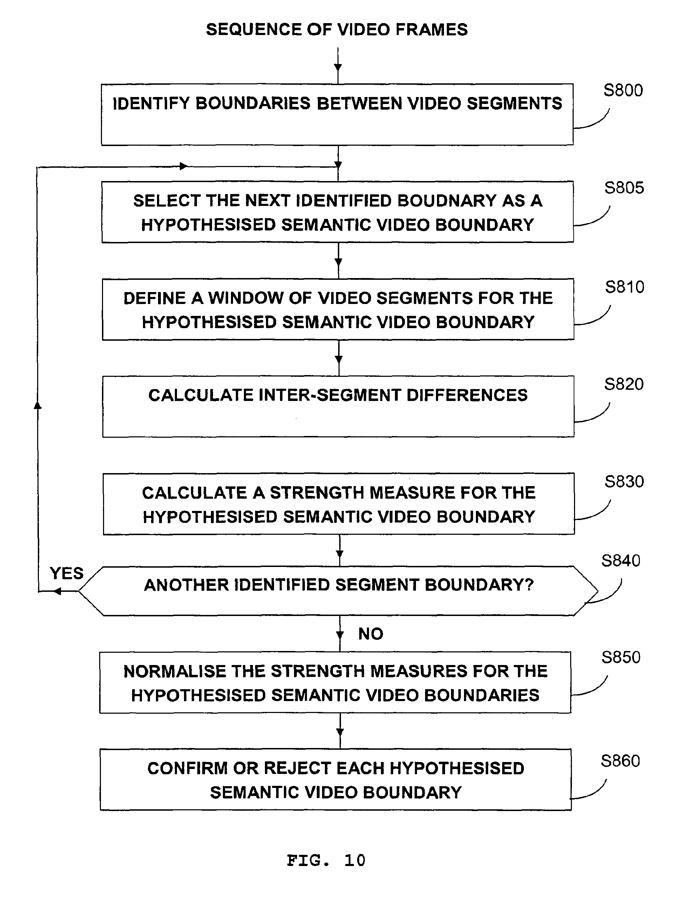

The processing operations performed in a second embodiment of the invention are illustrated in FIG. 10.

Referring to FIG. 10, steps S800, S805, S810, S820 and S830 are identical to steps S100, S105, S110, S120 and S130 of FIG. 2 respectively, and accordingly, they will not be described again here. However, in this second embodiment, no decisions are taken regarding the validity of individual hypothesised semantic boundaries on their own. Instead, the semantic boundary strength measure(s) calculated for each hypothesised semantic boundary are calculated and stored for the entire video. Then, in step S850, they are normalised by strength measure calculator 100, preferably according to some function of their values. For example, for a strength measure sequence $S_j$ with $j \in [0, M-1]$, i.e. calculated at every segment boundary in the video, the normalised strength measure may be calculated as

$$S'_j = S_j / \max\left(S\right),$$ i.e. by dividing the sequence by its maximum value. Alternatively, normalisation may take place not according to the maximum observed value, but instead the average of a number of the highest values, or the median value, etc. Then, in step S860, the hypothesised semantic boundaries are confirmed or rejected by processing essentially as per step S140 of FIG. 2. In essence, this allows the semantic boundary detection to adapt to each specific video, so that the best semantic boundaries are detected regardless of the nature of the video content.

Alternatively, in step S860, semantic boundaries are verified not by thresholding, as per step S 140 of FIG. 2, but by selecting the semantic boundaries with the strongest semantic boundary strength measure(s) so that a desired number of semantic boundaries is produced. This desired number of semantic boundaries may be specified by a user of the system or calculated automatically, for example by dividing the total video duration by a desirable average chapter duration, which may, in turn, be specified by a user or calculated automatically, for example according to rules of desirable average chapter duration for a video of a given genre.

**Modifications and Variations**

Many modifications and variations can be made to the embodiments described above within the scope of the present invention.

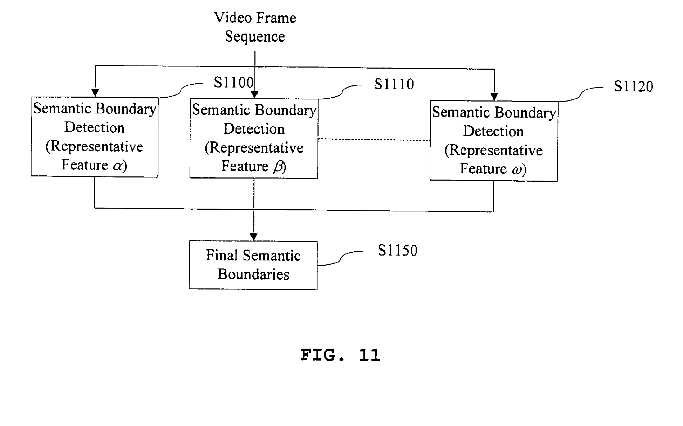

For example, as described earlier, there are various types of representative features for segments, for example frames or descriptors of frames. An embodiment of the invention may use more than one type of representative feature. By way of example, one embodiment of the invention may use both the Dominant Colour Descriptor and the Scalable Colour Descriptor, extracted from each representative frame of each segment. As another example, a different embodiment of the invention may use representative frames as well as one or more descriptors of representative frames. When multiple types of representative features are used, the above processing for calculating inter-frame differences, inter-segment differences and detecting semantic boundaries may be performed for each type of representative feature separately. This will give rise to multiple sets of semantic boundaries for a video, one for each type of representative feature. This is illustrated in FIG. 11, for three different types of representative features. Referring to FIG. 11, each of steps S1100, S1110 and S 1120 is implemented according to FIG. 2 or FIG. 10. In step S1150, the different sets of semantic boundaries are fused into a single final set of semantic boundaries for the video. For example, this can be achieved by simply accepting all semantic boundaries from all sets into the final set of semantic boundaries. Alternatively, all semantic boundaries from all sets may be provisionally accepted into the final set of semantic boundaries. Then, the semantic boundaries with the smallest temporal proximity are examined. If this temporal proximity is below some threshold $TH_{10}$, expressed in terms of segment index temporal distance or time temporal distance, only one is retained, for example the preceding one, or the one produced by the preferred representative feature type, or the one with the higher strength measure value, etc. This process is repeated until the temporal proximity of all semantic boundaries is above the threshold $TH_{10}$.

Alternatively, if multiple types of representative features are used, the inter-frame differences according to each type may be fused into a final inter-frame difference before the calculation of inter-segment differences, for example by normalisation and averaging. Similarly, rather than fusing the inter-frame differences according to each type, inter-segment differences according to each type may be calculated, and then fused into a final inter-segment difference before further processing, for example by normalisation and averaging. In all cases, the combination of inter-frame or inter-segment differences according to different representative feature types may be unweighted or weighted, to give greater significance to certain feature types.

Furthermore, instead of or in addition to representing each segment by actual frames or descriptors of frames, segments may be represented by descriptors capturing important visual characteristics of multiple frames or of the entire segment itself. An example of such a visual descriptor is the Motion Activity Descriptor. This descriptor is not presented here in detail, but is defined and expertly described in the MPEG-7 Standard ISO/IEC 15938-3:2002.

Furthermore, instead of or in addition to representing each segment by video frames or descriptors of video frames, or descriptors of multiple video frames or of the entire video segment itself, segments may be represented by audio features, for example audio frames, typically defined as a short sequence of audio samples, for example 1024 samples, or audio features, for example volume, pitch, dominant frequencies, etc.

Furthermore, instead of dividing a video into video segments according to visual characteristics, a video may be divided into video segments based on audio characteristics, for example by points of significant change of the audio content, which may include audio shot changes but also other significant audio changes, or fixed short-length audio segments, for example 1 or 2 seconds in duration.

The method of the embodiments of the invention is intended to operate on a video sequence which is either uncompressed or compressed, for example using the MPEG-1 or MPEG-2 or H.264 encoding method. For a compressed video sequence, the video sequence may be decoded before processing. Alternatively, an embodiment of the present invention may operate directly on the compressed video sequence or the partially decoded video sequence using suitably chosen representative features for the data.

**Claims**

1. A method of processing a sequence of video frames to detect a semantic video boundary in the sequence, the method comprising:

identifying segment boundaries between video segments in the sequence, wherein each video segment comprises a plurality of video frames (S100);
selecting an identified segment boundary as a hypothesised semantic video boundary (S 105);
defining a window of video segments adjacent the hypothesised semantic video boundary on at least one side thereof, the window containing a plurality of video segments (S 110);
calculating inter-segment differences between at least some of the video segments in the window (S120);
calculating at least one strength measure for the hypothesised semantic video boundary in dependence upon the calculated inter-segment differences (S 130); and
confirming or rejecting the hypothesised semantic video boundary in dependence upon the calculated strength measure(s) (S 140).

2. A method according to Claim 1, wherein:

the window of video segments is defined so as to include the hypothesised semantic video boundary and at least one video segment on each respective side of the hypothesised semantic video boundary;
inter-segment differences are calculated between video segments on different sides of the hypothesised semantic video boundary to generate cross-hypothesis inter-segment differences; and
the strength measure(s) for the hypothesised video boundary is calculated in dependence upon the cross-hypothesis inter-segment differences.

3. A method according to Claim 2, wherein video segments on different sides of the hypothesised semantic video boundary are selected for comparison to calculate a cross-hypothesis inter-segment difference if a distance between the video segments is less than a threshold ($TH_4$, $TH_5$).

4. A method according to Claim 2 or Claim 3, wherein:

inter-segment differences are also calculated between video segments on the same side of at least one side of the hypothesised semantic video boundary to generate same-side inter-segment differences; and

the strength measure(s) for the hypothesised video boundary is calculated in dependence upon both the cross-hypothesis inter-segment differences and the same-side inter-segment differences.

5. A method according to Claim 4, wherein video segments on the same side of the hypothesised semantic video boundary are selected for comparison to calculate a same-side inter-segment difference if a distance between the video segments is greater than a threshold ($TH_6$, $TH_7$).

6. A method according to any of Claims 2 to 5, wherein the window of video segments is defined so that the video segments on each respective side of the hypothesised semantic video boundary satisfy the condition that the total duration of the video segments is not below a time threshold ($TH_1$).

7. A method according to any of Claims 2 to 6, wherein the window of video segments is defined so that the video segments on each respective side of the hypothesised semantic video boundary satisfy the condition that the number of video segments is greater than a minimum number ($TH_2$) of segments.

8. A method according to any of Claims 2 to 7, wherein the window of video segments is defined so that the total number of video segments in the window does not exceed a maximum number ($TH_3$) of segments.

9. A method according to any preceding claim, wherein:

each video segment is represented by at least one visual descriptor defining visual characteristics of at least one video frame in the video segment; and
the process of calculating an inter-segment difference between video segments (S 120) comprises calculating a difference between the visual descriptor(s) of the video segments.

10. A method according to Claim 9, wherein:

each video segment is represented by a plurality of visual descriptors comprising at least one respective visual descriptor for each of a plurality of video frames in the video segment; and
the process of calculating an inter-segment difference between video segments (S120) comprises:

selecting a plurality of video frames within each video segment to be compared;
calculating inter-frame differences between the selected video frames in one of the segments and the selected video frames in the other of the segments, wherein each inter-frame difference is calculated by calculating a difference between at least one visual descriptor of each video frame being compared;

weighting each of the calculated inter-frame differences to generate weighted differences; and

evaluating a function of the weighted differences.

11. A method according to Claim 10, wherein each calculated inter-frame difference is weighted in dependence upon the positions in the video segments of the video frames for which the inter-frame difference was calculated.

12. A method according to Claim 10 or Claim 11, wherein each calculated inter-frame difference is weighted in dependence upon the relative positions of the video segments containing the video frames for which the inter-frame difference was calculated.

13. A method according to any of Claims 10 to 12, wherein each calculated inter-frame difference is weighted in dependence upon the type of the visual descriptor(s) compared to calculate the inter-frame difference.

14. A method according to any of Claims 9 to 13, wherein each visual descriptor comprises at least one of a Dominant Colour Descriptor, a Scalable Colour Descriptor and a Motion Activity Descriptor.

15. A method according to any preceding claim, wherein:

each inter-segment difference is weighted in dependence upon the temporal separation of the segments for which the inter-segment difference was calculated; and

the at least one strength measure is calculated in dependence upon the weighted inter-segment differences.

16. A method according to any preceding claim, wherein each video segment is represented by a plurality of representative features of different types;

the process of calculating inter-segment differences (S120) is performed for each respective type of representative feature to generate a plurality of inter-segment differences for each pair of video segments compared;

for each pair of video segments compared, the plurality of inter-segment differences are fused into a final inter-segment difference; and

the at least one strength measure is calculated in dependence upon the final inter-segment differences.

17. A method according to any of Claims 1 to 15, wherein:

each video segment is represented by a plurality of representative features of different types for each of a plurality of video frames in the segment; and

the process of calculating an inter-segment difference between video segments (S120) comprises:

comparing respective pairs of video frames, each pair comprising a video frame in one of the segments and a video frame in the other segment, and each pair being compared by calculating a plurality of inter-frame differences, each inter-frame difference being calculated by comparing the representative features of a respective type; for each pair of video frames compared, fusing the inter-frame differences into at least one final inter-frame difference; and calculating an inter-segment difference in dependence upon the final inter-frame differences.

18. A method according to any of Claims 1 to 15, wherein:

each video segment is represented by a plurality of representative features of different types;

a plurality of the identified segment boundaries are selected as hypothesised semantic video boundaries;

for each hypothesised semantic video boundary, the processes of calculating inter-segment differences (S120), calculating at least one strength measure (S130), and confirming or rejecting the hypothesised semantic video boundary (S 140) are performed a plurality of times, each time for a different type of representative feature, so as to generate a set of semantic video boundaries for each different type of representative feature; and

the sets of semantic video boundaries are fused into a set of semantic video boundaries for the video sequence.

19. A method according to any of Claims 2 to 8, and 9 to 18 when dependent upon any of Claims 2 to 8, wherein the strength measure for the hypothesised video boundary is calculated in dependence upon the minimum cross-hypothesis inter-segment difference.

20. A method according to Claim 19, wherein the hypothesised semantic video boundary is confirmed if the minimum cross-hypothesis inter-segment difference is above a threshold ($TH_8$).

21. A method according to any of Claims 1 to 19, wherein:

a plurality of the identified boundaries are selected as hypothesised semantic video boundaries;
the processes of defining a window of video frame segments (S110), calculating inter-segment differences (S120) and calculating at least one strength measure (S130) are performed for each of the respective hypothesised semantic video boundaries;
the calculated strength measures for the plurality of hypothesised semantic video boundaries are normalised; and
each hypothesised semantic video boundary is confirmed or rejected in dependence upon the normalised strength measures.

22. A method according to any preceding claim, wherein the segment boundaries between the video segments are identified based on audio characteristics of the video sequence.

23. A method according to Claim 1 or Claim 22, wherein:

each video segment is represented by at least one audio feature of the video segment; and
the process of calculating an inter-segment difference (S120) between video segments comprises calculating a difference between the audio feature(s) of the video segments.

24. Apparatus operable to process a sequence of video frames to detect a semantic video boundary in the sequence, the apparatus comprising:

a segment boundary identifier (60) operable to identify segment boundaries between video segments in the sequence, wherein each video segment comprises a plurality of video frames;
a segment boundary selector (70) operable to select an identified segment boundary as a hypothesised semantic video boundary;
a window identifier (80) operable to define a window of video segments adjacent the hypothesised semantic video boundary on at least one side thereof, the window containing a plurality of video segments;
an inter-segment difference calculator (90) operable to calculate inter-segment differences between at least some of the video segments in the window;
a strength measure calculator (100) operable to calculate at least one strength measure for the hypothesised semantic video boundary in dependence upon the calculated inter-segment differences; and
a decision calculator (110) operable to confirm or reject the hypothesised semantic video boundary in dependence upon the calculated strength measure(s).

25. Apparatus according to Claim 24, wherein:

the window identifier (80) is operable to define the window of video segments so as to include the hypothesised semantic video boundary and at least one video segment on each respective side of the hypothesised semantic video boundary;
the inter-segment difference calculator (90) is operable to calculate inter-segment differences between video segments on different sides of the hypothesised semantic video boundary to generate cross-hypothesis inter-segment differences; and
the strength measure calculator (100) is operable to calculate the strength measure(s) for the hypothesised video boundary in dependence upon the cross-hypothesis inter-segment differences.

26. Apparatus according to Claim 25, wherein the inter-segment difference calculator (90) is operable to select video segments on different sides of the hypothesised semantic video boundary for comparison to calculate a cross-hypothesis inter-segment difference if a distance between the video segments is less than a threshold ($TH_4$, $TH_5$).

27. Apparatus according to Claim 25 or Claim 26, wherein:

the inter-segment difference calculator (90) is further operable to calculate inter-segment differences between video segments on the same side of at least one side of the hypothesised semantic video boundary to generate same-side inter-segment differences; and
the strength measure calculator (100) is operable to calculate the strength measure(s) for the hypothesized video boundary in dependence upon both the cross-hypothesis inter-segment differences and the same-side inter-segment differences.

28. Apparatus according to Claim 27, wherein the inter-segment difference calculator (90) is operable to select video segments on the same side of the hypothesised semantic video boundary for comparison to calculate a same-side inter-segment difference if a distance between the video segments is greater than a threshold ($TH_6$, $TH_7$).

29. Apparatus according to any of Claims 25 to 28, wherein the window identifier (80) is operable to define the window of video segments so that the video segments on each respective side of the hypothesised semantic video boundary satisfy the condition that the total duration of the video segments is not below a time threshold (TH$_1$).

30. Apparatus according to any of Claims 25 to 29, wherein the window identifier (80) is operable to define the window of video segments so that the video segments on each respective side of the hypothesised semantic video boundary satisfy the condition that the number of video segments is greater than a minimum number (TH$_2$) of segments.

31. Apparatus according to any of Claims 25 to 30, wherein the window identifier (80) is operable to define the window of video segments so that the total number of video segments in the window does not exceed a maximum number (TH$_3$) of segments.

32. Apparatus according to any of Claims 24 to 31, wherein:

the apparatus is operable to process a video sequence in which each video segment is represented by at least one visual descriptor defining visual characteristics of at least one video frame in the video segment; and
the inter-segment difference calculator (90) is operable to calculate an inter-segment difference between video segments by calculating a difference between the visual descriptor(s) of the video segments.

33. Apparatus according to Claim 32, wherein:

the apparatus is operable to process a video sequence in which each video segment is represented by a plurality of visual descriptors comprising at least one respective visual descriptor for each of a plurality of video frames in the video segment; and
the inter-segment difference calculator comprises:

a frame selector (93) operable to select a plurality of video frames within each video segment to be compared;
a frame difference calculator (95) operable to calculate inter-frame differences between the selected video frames in one of the segments and the selected video frames in the other of the segments, the frame difference calculator (95) being operable to calculate each inter-frame difference by calculating a difference between at least one visual descriptor of each video frame being compared;
a weight calculator (97) operable to weight each of the calculated inter-frame differences to generate weighted differences; and
an inter-frame difference function evaluator (99) operable to evaluate a function of the weighted differences.

34. Apparatus according to Claim 33, wherein the weight calculator (97) is operable to weight each calculated inter-frame difference in dependence upon the positions in the video segments of the video frames for which the inter-frame difference was calculated.

35. Apparatus according to Claim 33 or Claim 34, wherein the weight calculator (97) is operable to weight each calculated inter-frame difference in dependence upon the relative positions of the video segments containing the video frames for which the inter-frame difference was calculated.

36. Apparatus according to any of Claims 33 to 35, wherein the weight calculator (97) is operable to weight each calculated inter-frame difference in dependence upon the type of the visual descriptor(s) compared to calculate the inter-frame difference.

37. Apparatus according to any of Claims 32 to 36, wherein each visual descriptor comprises at least one of a Dominant Colour Descriptor, a Scalable Colour Descriptor and a Motion Activity Descriptor.

38. Apparatus according to any of Claims 24 to 37, wherein:

the strength measure calculator (100) is operable to weight each inter-segment difference in dependence upon the temporal separation of the segments for which the inter-segment difference was calculated; and
the strength measure calculator (100) is operable to calculate the at least one strength measure in dependence upon the weighted inter-segment differences.

39. Apparatus according to any of Claims 24 to 38, wherein
the apparatus is operable to process a video sequence in which each video segment is represented by a plurality of representative features of different types;
the inter-segment difference calculator (90) is operable to perform the process of calculating inter-segment differences for each respective type of representative feature to generate a plurality of inter-segment differences for each pair of video segments compared;

the inter-segment difference calculator (90) is operable, for each pair of video segments compared, to fuse the plurality of inter-segment differences into a final inter-segment difference; and

the strength measure calculator (100) is operable to calculate the at least one strength measure in dependence upon the final inter-segment differences.

40. Apparatus according to any of Claims 24 to 38, wherein:

the apparatus is operable to process a video sequence in which each video segment is represented by a plurality of representative features of different types for each of a plurality of video frames in the segment; and
the inter-segment difference calculator (90) is operable to calculate an inter-segment difference between video segments by:

comparing respective pairs of video frames, each pair comprising a video frame in one of the segments and a video frame in the other segment, and each pair being compared by calculating a plurality of inter-frame differences, each inter-frame difference being calculated by comparing the representative features of a respective type; for each pair of video frames compared, fusing the inter-frame differences into at least one final inter-frame difference; and calculating an inter-segment difference in dependence upon the final inter-frame differences.

41. Apparatus according to any of Claims 24 to 38, wherein:

the apparatus is operable to process a video sequence in which each video segment is represented by a plurality of representative features of different types;
the segment boundary selector (70) is operable to select a plurality of the identified segment boundaries as hypothesised semantic video boundaries;
for each hypothesised semantic video boundary, the inter-segment difference calculator (90), strength measure calculator (100) and decision calculator (110) are arranged to perform processing a plurality of times, each time for a different type of representative feature, so as to generate a set of semantic video boundaries for each different type of representative feature; and
the apparatus is operable to fuse the sets of semantic video boundaries into a set of semantic video boundaries for the video sequence.

42. Apparatus according to any of Claims 25 to 31, and 32 to 41 when dependent upon any of Claims 25 to 31, wherein the strength measure calculator (100) is operable to calculate the strength measure for the hypothesised video boundary in dependence upon the minimum cross-hypothesis inter-segment difference.

43. Apparatus according to Claim 42, wherein the decision calculator (110) is operable to confirm the hypothesised semantic video boundary if the minimum cross-hypothesis inter-segment difference is above a threshold ($TH_8$).

44. Apparatus according to any of Claims 24 to 42, wherein:

the segment boundary selector (70) is operable to select a plurality of the identified boundaries as hypothesised semantic video boundaries;
the window identifier (80), inter-segment difference calculator (90) and strength measure calculator (100) are arranged to perform processing for each of the respective hypothesised semantic video boundaries;
the strength measure calculator (100) is operable to normalise the calculated strength measures for the plurality of hypothesised semantic video boundaries; and
the decision calculator is operable to confirm or reject each hypothesised semantic video boundary in dependence upon the normalised strength measures.

45. Apparatus according to any of Claims 24 to 44, wherein the segment boundary identifier (60) is operable to identify the segment boundaries between the video segments based on audio characteristics of the video sequence.

46. Apparatus according to Claim 24 or Claim 45, wherein:

the apparatus is operable to process a video sequence, in which each video segment is represented by at least one audio feature of the video segment; and
the inter-segment difference calculator (90) is operable to calculate an inter-segment difference between video segments by calculating a difference between the audio feature(s) of the video segments.

47. A computer program product carrying computer program instructions to program a programmable processing apparatus to become operable to perform a method as set out in at least one of Claims 1 to 23.

FIG. 1a

**FIG. 1b**

SEQUENCE OF VIDEO FRAMES

IDENTIFY BOUNDARIES BETWEEN VIDEO SEGMENTS
S100

SELECT THE NEXT IDENTIFIED BOUDNARY AS A HYPOTHESISED SEMANTIC VIDEO BOUNDARY
S105

DEFINE A WINDOW OF VIDEO SEGMENTS FOR THE HYPOTHESISED SEMANTIC VIDEO BOUNDARY
S110

CALCULATE INTER-SEGMENT DIFFERENCES
S120

CALCULATE A STRENGTH MEASURE FOR THE HYPOTHESISED SEMANTIC VIDEO BOUNDARY
S130

CONFIRM OR REJECT THE HYPOTHESISED SEMANTIC VIDEO BOUNDARY
S140

YES ← ANOTHER IDENTIFIED SEGMENT BOUNDARY?
S150

NO

END

FIG. 2

FIG. 3

$c$

$\longleftarrow$ ——$A(=B)$ shots—— $\longrightarrow$   $\longleftarrow$ ——$B(=A)$ shots—— $\longrightarrow$

| $s_{n-A+1}$ | | $\cdots$ | | $s_n$ | $s_{n+1}$ | | $\cdots$ | $s_{n+B}$ | | |

FIG. 4a

$c$

$TH_l$ $TH_l$

$T_A$ $T_B$

$A$ shots $B$ shots

$s_{n-A+1}$ | $s_n$ | $s_{n+1}$ | $s_{n+B}$

**FIG. 4b**

EP 2 408 190 A1

$TH_1$    $c$    $TH_1$

$T_A$     $T_B$

$TH_3$     $TH_3$

$TH_2$     $TH_2$

$A$ shots     $B$ shots

$S_{n-A+1}$     $S_n$   $S_{n+1}$     $S_{n+B}$

FIG. 4c

FIG. 5

$c$

cross-hypothesis difference

| $S_{n-A+1}$ | $S_x$ | | $S_z$ | $S_n$ | $S_{n+1}$ | $S_y$ | | | | $S_{n+B}$ | |

$y$-$x$

$TH_4$

$T_{yx}$

$TH_5$

FIG. 6a

FIG. 6b

FIG. 7a

FIG. 7b

$$w_a(g)w_b(h)$$

FIG. 7c

FIG. 8

FIG. 9

SEQUENCE OF VIDEO FRAMES

IDENTIFY BOUNDARIES BETWEEN VIDEO SEGMENTS — S800

SELECT THE NEXT IDENTIFIED BOUDNARY AS A HYPOTHESISED SEMANTIC VIDEO BOUNDARY — S805

DEFINE A WINDOW OF VIDEO SEGMENTS FOR THE HYPOTHESISED SEMANTIC VIDEO BOUNDARY — S810

CALCULATE INTER-SEGMENT DIFFERENCES — S820

CALCULATE A STRENGTH MEASURE FOR THE HYPOTHESISED SEMANTIC VIDEO BOUNDARY — S830

YES ANOTHER IDENTIFIED SEGMENT BOUNDARY? — S840

NO

NORMALISE THE STRENGTH MEASURES FOR THE HYPOTHESISED SEMANTIC VIDEO BOUNDARIES — S850

CONFIRM OR REJECT EACH HYPOTHESISED SEMANTIC VIDEO BOUNDARY — S860

FIG. 10

Video Frame
Sequence

Semantic Boundary
Detection
(Representative
Feature $\alpha$)
— S1100

Semantic Boundary
Detection
(Representative
Feature $\beta$)
— S1110

Semantic Boundary
Detection
(Representative
Feature $\omega$)
— S1120

Final Semantic
Boundaries
— S1150

**FIG. 11**

Europäisches
Patentamt

European
Patent Office

Office européen
des brevets

# EUROPEAN SEARCH REPORT

**Application Number**

EP 10 16 9225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 722 371 A1 (SAMSUNG ELECTRONICS CO LTD [KR]) 15 November 2006 (2006-11-15) * abstract * * paragraphs [0006] - [0011] * * paragraphs [0015] - [0074] * * figures 1-18 * | 1-47 | INV. H04N5/14 G06K9/00 |
| X | WO 2010/055242 A1 (FRANCE TELECOM [FR]; LECHAT PATRICK [FR]; BERRANI SID AHMED [FR]; BESS) 20 May 2010 (2010-05-20) * abstract * * page 4, line 11 - page 10, line 10 * * figures 1-6 * | 1-47 | |
| X | ALAN HANJALIC ET AL: "Automated High-Level Movie Segmentation for Advanced Video-Retrieval Systems", IEEE TRANSACTIONS ON CIRCUITS AND SYSTEMS FOR VIDEO TECHNOLOGY, IEEE SERVICE CENTER, PISCATAWAY, NJ, US, vol. 9, no. 4, 1 June 1999 (1999-06-01), XP011014580, ISSN: 1051-8215 * the whole document * | 1-47 | |
| | | | TECHNICAL FIELDS SEARCHED (IPC) |
| | | | H04N G06K G06F G06T |
| X | WO 2007/072347 A2 (KONINKL PHILIPS ELECTRONICS NV [NL]; NESVADBA JAN A D [NL]; JOSHI YASH) 28 June 2007 (2007-06-28) * abstract * * page 5, line 21 - page 19, line 6 * * figures 1-19 * | 1-47 | |
| A | US 2003/020966 A1 (YASHIRO SATOSHI [JP]) 30 January 2003 (2003-01-30) * abstract * * paragraphs [0009] - [0034] * * figures 1-13 * | 1-47 | |

-/--

The present search report has been drawn up for all claims

| Place of search | Date of completion of the search | Examiner |
|---|---|---|
| Munich | 23 December 2010 | Horstmannshoff, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 10 16 9225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/093638 A1 (BRITISH TELECOMM [GB]; XU LI-QUN [GB]; BENINI SERGIO [IT]) 6 October 2005 (2005-10-06) * abstract * * page 4, line 15 - page 5, line 6 * * figures 1-17 * ----- | 1-47 | |
| A | US 2008/316307 A1 (PETERSOHN CHRISTIAN [DE]) 25 December 2008 (2008-12-25) * abstract * * paragraphs [0014] - [0042] * * figures 1-12 * ----- | 1-47 | |

TECHNICAL FIELDS
SEARCHED (IPC)

The present search report has been drawn up for all claims

| Place of search | Date of completion of the search | Examiner |
|---|---|---|
| Munich | 23 December 2010 | Horstmannshoff, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 9225

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2010

| Patent document cited in search report | | | Publication date | Patent family member(s) | | | Publication date |
|---|---|---|---|---|---|---|---|
| EP 1722371 | A1 | | 15-11-2006 | JP<br>KR<br>US | 2006319980 A<br>20060116335 A<br>2006251385 A1 | | 24-11-2006<br>15-11-2006<br>09-11-2006 |
| WO 2010055242 | A1 | | 20-05-2010 | NONE | | | |
| WO 2007072347 | A2 | | 28-06-2007 | NONE | | | |
| US 2003020966 | A1 | | 30-01-2003 | US | 2007172206 A1 | | 26-07-2007 |
| WO 2005093638 | A1 | | 06-10-2005 | AT<br>CA<br>CN<br>EP<br>US | 398811 T<br>2561085 A1<br>1938714 A<br>1728195 A1<br>2007201558 A1 | | 15-07-2008<br>06-10-2005<br>28-03-2007<br>06-12-2006<br>30-08-2007 |
| US 2008316307 | A1 | | 25-12-2008 | AT<br>DE<br>EP<br>WO | 484801 T<br>102007028175 A1<br>2132667 A2<br>2008155094 A2 | | 15-10-2010<br>02-01-2009<br>16-12-2009<br>24-12-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040086258 A
- US 20080112618 A
- US 20090136198 A
- US 20060263061 A
- US 20060114992 A
- EP 1640914 A
- EP 1640913 A
- EP 1914994 A